# EUROPEAN PATENT APPLICATION

(11) **EP 4 401 005 A1**
(43) Date of publication of application: **17.07.2024**
(21) Application number: 23382022.4
(22) Date of filing: 12.01.2023
(51) Int. Cl.: G06K 19/077

(54) **PORTABLE DATA CARRIER**

(71) Applicant: Giesecke+Devrient ePayments GmbH, 81677 München (DE)
(72) Inventor: Perelló, Carles, 08820 El Prat de Llobregat (Barcelona) (ES); Tejero, Sergio, 08820 El Prat de Llobregat (Barcelona) (ES)
(74) Representative: Giesecke+Devrient IP

(57) **Abstract**

A card-shaped data carrier 1 with a chip module 3 with contact surfaces 4 embedded in its card body 2 is proposed, in which the chip module 3 is covered with a flat seal 6 in such a way that it cannot be removed from the card body 2 without damaging the seal 6. The seal 6 at least partially covers a circumferential edge 5 of the chip module 3, which delimits the chip module 3 from the card body 2. The seal 6 preferably comprises a lower sealing layer 8 applied to the card body 2 and an upper sealing layer 7 at least partially covering the lower sealing layer 8. The lower sealing layer 8 at least partially covers the circumferential edge 5 and leaves the contact surfaces 4 exposed.

## Description

The present invention relates to portable card-shaped data carriers having chip modules with contact surfaces embedded in their card bodies, and to methods for production and use of such data carriers.

Portable card-shaped data carriers of the above-mentioned type are in circulation by the tens of millions worldwide. They usually have important personal data of legitimate users stored therein, such as names, addresses, account details, access passwords and the like. Such card-shaped data carriers are used particularly frequently as bank, debit and credit cards that grant the legitimate user access to his account via a terminal in order to carry out money transfers. For this purpose, the terminal reads out personal data via the contact surfaces of the chip module and processes the read-out data, for example by authenticating the user of the data carrier, such as a bank customer, on the basis of the read-out data and giving him access to his account in order to carry out money transfers.

After production the aforementioned card-shaped data carriers are sent by regular mail by the card manufacturer or by a card issuer, such as a bank or credit institution, to the legitimate user. The user must first subject the data carrier to a validation process, which ensures that the data carrier has reached the legitimate user before the data carrier is allowed for the intended use. The user can perform the validation at a suitable terminal or online.

A fraud scenario that has been known for some years is to intercept the data carrier on its way from the manufacturer or issuer to the legitimate user and to manipulate it before validation by replacing the original chip of the data carrier with a manipulated or an invalid or old chip. After such fraudulent exchange of chips, the manipulated data carrier is then prepared and sent to the user in such a way that the manipulation is only noticed upon validation. Within this time window between manipulation and failed validation, the user's account can be compromised by means of the removed original chip.

In this respect, the present invention addresses the improvement of the security of a data carrier of the type mentioned by excluding the fraud scenario described above.

This problem is solved by a card-shaped data carrier and by methods according to the independent claims. Further embodiments and preferred variants of the invention are given in the dependent claims.

According to a first aspect of the invention, a card-shaped data carrier is provided with a chip module with contact surfaces embedded in its card body, the chip module of which is covered with a flat seal in such a way that an attacker cannot remove the chip module from the card body and/or exchange it for a manipulated or expired chip module without damaging the seal.

The inventive seal effectively prevents the attack scenario described above, because manipulation of the chip module or its replacement is no longer possible without the user immediately recognizing this by the damage to the seal.

The seal is therefore made of a suitable material that prevents the seal from being peeled off the card body without leaving any traces of tampering, such as distortions, tears or other damages, and/or from being applied back onto the card body in the correct position after tampering without leaving any traces of tampering visible to the user.

For this purpose, the seal is preferably applied to the card body in such a way that it at least partially covers a circumferential edge of the chip module, which delimits the chip module from the card body when viewed from above. By at least partially covering the circumferential edge, the seal will be compromised when the chip module is removed from the card body. The preferred complete covering of the circumferential edge by the seal even increases this security effect.

Particularly preferably, the seal according to the present invention comprises a lower and an upper sealing layer, which are arranged on top of each other on the card body, while each sealing layer causing different security effects that contribute to the overall security gain provided by the present invention. Here, the lower sealing layer is applied directly to the card body and/or the chip module, while the upper sealing layer covers the lower sealing layer at least partially, preferably completely.

Preferably, the lower sealing layer covers the circumferential edge that delimits the chip module from the card body and leaves the contact surfaces of the chip module uncovered. In this way, the lower sealing layer ensures two things, namely on the one hand that the chip module cannot be removed without leaving traces of manipulation, and on the other hand that the card-shaped data carrier can be used as intended even though the lower sealing layer is applied to it.

The upper sealing layer, on the other hand, preferably completely covers the chip module and its contact surfaces, so that the user must remove the upper sealing layer before he can use the data carrier as intended. Preferably, the upper sealing layer also completely covers the lower sealing layer so that the latter is not visible as long as the upper sealing layer is not removed.

The lower sealing layer is preferably made of an anti-peel material that leaves tamper marks as soon as the lower sealing layer is tampered with or attempts are made to remove the lower sealing layer from the data carrier, for example to remove the chip module from the card body. In particular, the material properties of the anti-peeling material are such that it permanently and irrevocably deforms or distorts the material when attempts are made to remove it from the card body.

In contrast, the material of the upper sealing layer is such that it can be removed without damaging the lower sealing layer or the data carrier. Preferably, the upper sealing layer deforms during removal so that it cannot be reapplied to the data carrier unnoticed once it has been removed.

An attacker according to the above-mentioned scenario can therefore remove neither the upper nor the lower sealing layer without the legitimate user noticing this. The user, on the other hand, can remove the upper sealing layer for validation and later legitimate use of the data carrier without compromising the protection of the chip module provided by the lower sealing layer.

The lower sealing layer is preferably transparent or at least designed in such a way that it does not differ or differs as little as possible from the graphic design of the data carrier or the card body. This means that the lower sealing layer is in particular in the same color as the card body.

As an additional security effect, the seal or its two sealing layers can be designed in such a way that manipulations not only cause damage or traces to the lower and/or upper sealing layer, but that the chip module and/or the card body also bear traces of manipulation or damage as soon as the lower sealing layer is manipulated or an attempt is made to remove it from the data carrier. Such manipulation marks are, for example, material degeneration or discoloration caused by the lower sealing layer or any adhesive layer.

The data carrier according to the invention may be a credit or debit card, a payment card, an access card, an identification card or the like, which in particular complies with the relevant standards and norms in connection with chip or payment cards, such as the EMVCo standards.

According to a second aspect of the present invention, a method for manufacturing a card-shaped data carrier according to the first aspect is provided. In particular, the manufacturing method according to the invention comprises the following two further manufacturing steps, after manufacturing a card-shaped data carrier with chip module:
- First, a lower sealing layer according to the invention is applied to the card body of the data carrier in such a way that it at least partially covers a circumferential edge of the chip module which delimits it from the card body.
- Then, an upper sealing layer is then applied to the card body in such a way that it covers the lower sealing layer at least partially, preferably completely.

In a preferred further step, the data carrier produced in this way is then delivered to the legitimate user or customer, for example by mail. The two aforementioned steps ensure that the above-mentioned fraud scenario is effectively prevented when the data carrier is delivered to the user.

According to a third aspect of the present invention, a card-shaped data carrier according to the invention is finally put into use by the legitimate user by removing the undamaged upper sealing layer, thereby exposing the contact surfaces of the chip module without compromising the protection provided by the lower sealing layer. The user can then validate the data carrier and use it as intended.

Further features and advantages of the invention will be apparent from the following description of embodiments according to the invention and further alternative embodiments in connection with the following drawings, which show:
- Fig. 1a: a card-shaped data carrier with a seal according to the invention;
- Fig. 1b: a card-shaped data carrier with the lower sealing layer according to the invention;
- Fig. 1c: a card-shaped data carrier in the state before the seal according to the invention is applied;
- Fig. 2a-2c: the area of the chip module of the data carriers according to Fig. 1a to 1c in greater detail;
- Fig. 3: a sectional view of the data carrier with the seal according to the invention along line III-III in Fig. 2a;
- Fig. 4: a schematic sequence of the method according to the invention.

The invention is explained in detail below with reference to the accompanying drawings, which illustrate specific embodiments and examples of embodiments of the present invention. These embodiments are described in sufficient detail to enable the person skilled in the art to implement the invention. While the various embodiments may differ from one another, they are not mutually exclusive. For example, a particular feature, structure or element described in connection with one embodiment may also be implemented in connection with another embodiment without departing from the scope of the present invention. Similarly, the position or arrangement of individual elements (or steps) within an embodiment may be modified without departing from the scope of the present invention.

The following description is therefore not to be understood in a restrictive sense. In particular, the scope of the present invention is defined exclusively by the appended claims and the equivalents resulting from their interpretation.

In the drawings, the same numbers refer to the same or similar functionality in the different views.

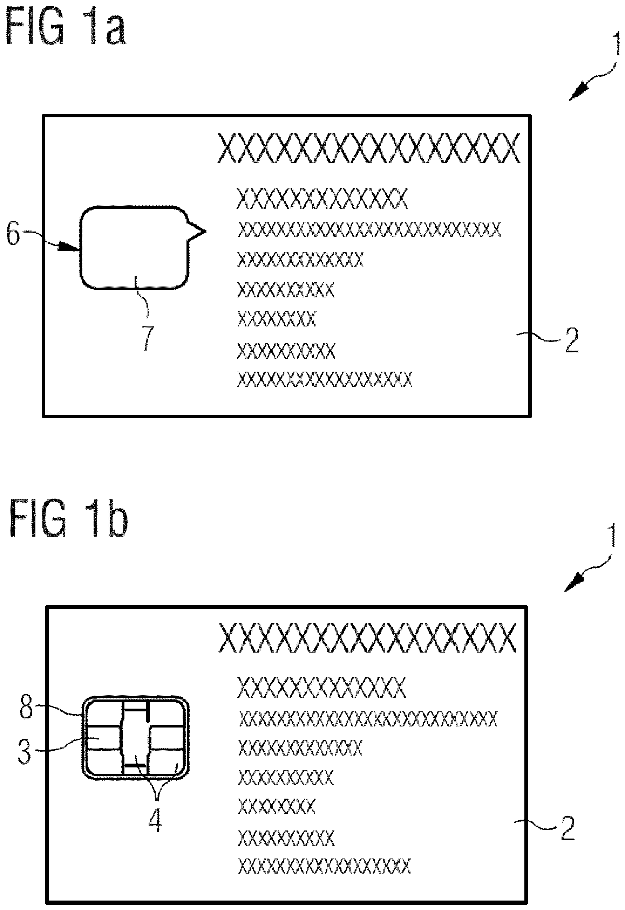

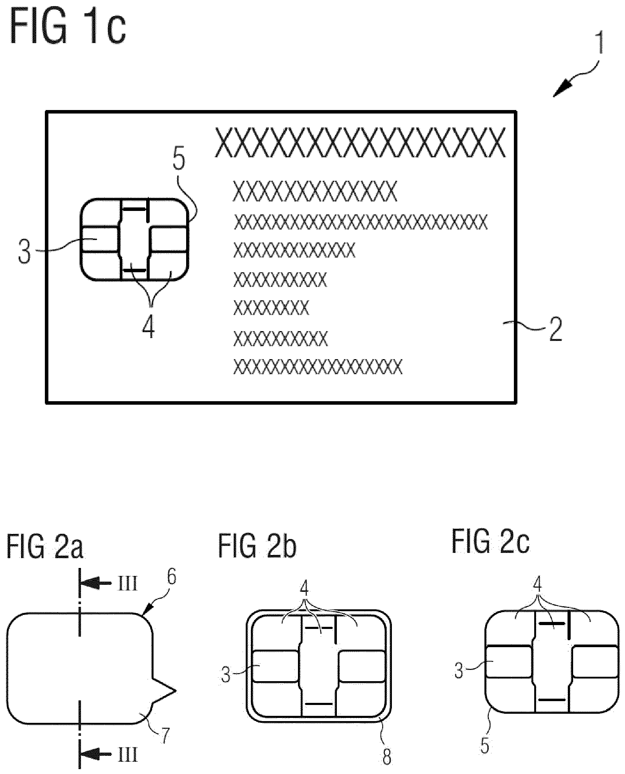

Fig. 1 shows a card-shaped data carrier 1 in three different configurations. Fig. 1c shows a conventional contact-based smart card or chip card 1 as a card-shaped data carrier, in whose plastic card body 2 a chip module 3 is embedded, via whose standardized contact surfaces 4 the chip card 1 can enter into data communication with a suitable terminal, for example with a payment transaction or POS terminal ("point of sale"). The chip card 1 shown in Fig. 1c is also physically individualized to the legitimate user, which is symbolized by the indicated inscription ("XXX") on the surface of the card body 2, which indicates the name of the user and the card issuer as well as an account number, an expiry date and the like.

The chip card 1 according to the invention is usually a debit or credit card, a payment card or the like, which generally complies with the relevant norms and standards, such as the EMVCo standard. A chip card 1 according to the invention can also provide functions outside financial services, for example in the form of an access or identification card, which is also used by means of contact-based data communication.

In the conventional production of a card-shaped data carrier 1 as shown in Fig. 1c, the chip module 3 is inserted into a suitable cavity of the card body 2 and, if necessary, electrically contacted with further structures in the card body 2, for example with an antenna or the like. After the flush insertion of the chip module 3 into the card body 2, a circumferential edge 5 results at the transition between the chip module 3 and the card body 2.

This circumferential edge 5 demarcates the surface of the chip module 3 from the surface of the card body 2 and forms a point of attack in such fraud or attack scenarios that are based on replacing an original chip module 3, which is usually personalized or electronically individualized to a legitimate user, with a manipulated or expired chip module. Fig. 2c shows the chip module 3 with contact surfaces 4 and the circumferential edge 5 in higher resolution.

In the attack referred to above, the original chip module 3 is replaced by an attacker with another chip module 3 in the associated card body 2, such as a manipulated or expired chip module from another chip card, in such a way that the legitimate user of the chip card 1 does not notice the fraud, or at least not immediately. This then gives the attacker enough time to illegitimately access the user's account using the removed original chip module 3. When the user notices the fraud, for example when he contacts the card issuer after the failed validation of his chip card 1, the fraud has usually long been completed.

According to the invention, this attack scenario is prevented by a seal 6, which the attacker must inevitably damage in order to remove the original chip module 3 from the card body 2 and replace it. For this purpose, the seal 6 is made of a suitable material that is either damaged during the manipulation or can no longer be applied to the chip card 1 after the manipulation without the user noticing the manipulation immediately.

Fig. 1a and 1b illustrate the seal 6 according to the invention. According to a preferred embodiment, the seal 6 comprises a lower sealing layer 8 (Fig. 1b) and an upper sealing layer 7 (Fig. 1a), which completely covers the former and preferably the entire visible chip module 3. Fig. 2a and 2b show the respective sealing layers 7, 8 in higher resolution.

Fig. 1b (Fig. 2b) shows that according to a preferred embodiment, the lower sealing layer 8 is applied to the circumferential edge 5 in such a way that it completely covers the circumferential edge 5 and, along the circumferential edge 5, covers sections of the card body 2 on the one hand and sections of the chip module 3 on the other hand. In this case, however, the contact surfaces 4 of the chip module 3 remain uncovered so that the user can use the chip card 1 in connection with a POS terminal even though the lower sealing layer 8 covers the circumferential edge 5.

The geometry and two-dimensional design of the lower sealing layer can of course be different from that shown in Fig. 1b, as long as the lower sealing layer 8 fulfils its two functions according to the invention, namely on the one hand the complete or partial covering of the circumferential edge 5 in such a way that the chip module 3 cannot be removed from the card body 2 without permanent damage to the lower sealing layer 8, and on the other hand leaving the contact surfaces 4 free to allow the user to use the chip card 1. For example, it is possible for the lower sealing layer 8 to cover the circumferential edge 5 only in sections or for the lower sealing layer to cover the card body 2 over a large area or even completely, and then serve as a further protective layer, possibly provided with additional security features, while the contact surfaces 4 remain accessible.

The lower sealing layer 8 is therefore preferably transparent or at least reproduces the color scheme and design of the card body 2 in such a way that the lower sealing layer 8 is not, or at least not immediately, noticeable to the untrained observer.

Fig. 1a (Fig. 2a) shows that according to a preferred embodiment, the upper sealing layer 7 completely covers the lower sealing layer 8 and the chip module 4. The function of the upper sealing layer 7 is that it covers at least the contact surfaces 4 in such a way that the chip card 1 cannot be used without first peeling off the upper sealing layer 7. The geometry and two-dimensional design of the upper sealing layer 7 can of course be different from that shown in Fig. 1a, as long as the upper sealing layer 7 fulfils its two functions according to the invention, namely to prevent immediate use of the chip card 1 on the one hand and to protect the contact surfaces 4 during postal dispatch on the other. For example, it is also possible that the upper sealing layer 7 does not completely cover the lower sealing layer 8 and/or that the contact surfaces 4 are only covered in such a way that immediate use of the chip card 1 is precluded. For example, the upper sealing layer 7 can be designed as a grid or mesh pattern or the like.

The materials and the geometries of the upper and lower sealing layers 7, 8 are selected according to the invention in such a way that the chip module 3 cannot be removed from the card body 2 without damaging the seal 6.

Here, the upper sealing layer 7 and the lower sealing layer 8 are designed in such a way that the upper sealing layer 7 can be removed without damaging the lower sealing layer 8 or the data carrier 1 or its card body 2, but it can then no longer be applied to the card body 2 without it being obvious that it has already been removed. The material of the upper sealing layer 7 and/or the adhesion or an adhesive layer between the upper and lower sealing layers 7, 8 is thus selected in such a way that the upper sealing layer 7 deforms, tears or is otherwise irreversibly deformed when it is removed from the card body 2, but that on the other hand it does not impair the lower sealing layer 8 and the card body 2 or the chip module 3 in any way.

The material of the lower sealing layer 8 in turn is preferably an anti-peel material that cannot be removed from the card body 2 for the purpose of exposing the circumferential edge 6 without leaving manipulation marks or damage. These manipulation marks or damages preferably occur at the lower sealing layer 8, but can also become additionally visible at the card body 2 and/or at the chip module 3. The material of the lower sealing layer 8 and/or the adhesion or an adhesive layer between the lower sealing layer 8 and the card body 2/chip module 3 is thus selected in such a way that the lower sealing layer 8 deforms, tears or is otherwise irreversibly deformed when it is peeled off from the circumferential edge 5, but that on the other hand it remains unaffected by the peeling off of the upper sealing layer 7.

Preferably, the lower sealing layer 8 also leaves traces, such as adhesions, material degenerations or discolorations in the card body 2 and/or the chip module 3, so that a completely missing lower sealing layer 8 is nevertheless recognized by the legitimate user on the basis of these manipulation traces in the card body 2 and/or on the chip module 3.

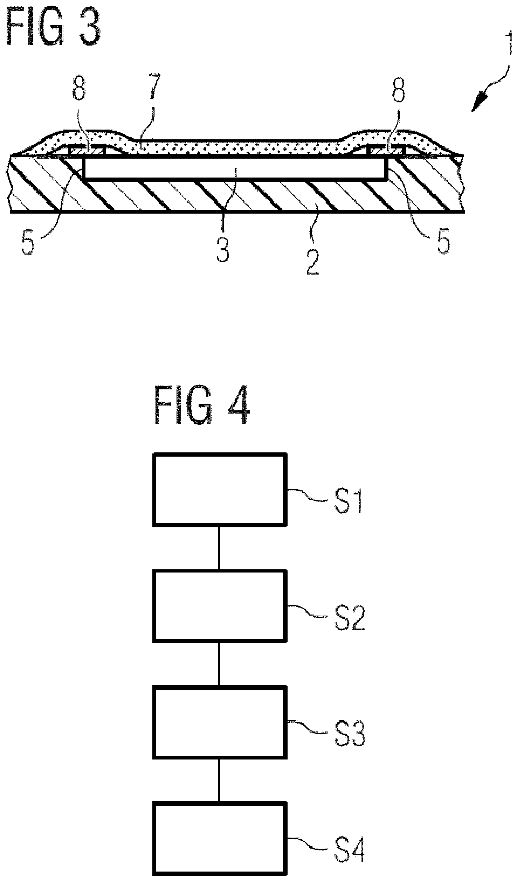

Fig. 3 shows a cross-sectional view through the chip module according to Fig. 2a along line III-III. The dimensions of the illustrated sections of the lower and upper sealing layers 7, 8 do not correspond to reality, but are designed in such a way that the invention can be clearly seen from Fig. 3.

Fig. 3 also shows that the lower sealing layer 8 covers the circumferential edge 5, but leaves the contact surfaces of the chip module 3 free. The upper sealing layer 7 covers the chip module 3 as well as the shown sections of the lower sealing layer 8. The curvature of the upper sealing layer 7 when passing over the lower sealing layer 8 will hardly or not at all be visible in reality, depending on the material of the upper sealing layer 8.

Finally, Fig. 4 illustrates a manufacturing and use method concerning the chip card 1 according to the invention as shown in Figs. 1 to 3.

According to a step S1, the lower sealing layer 8 is applied to the card body 2 of a chip card 1 according to Fig. 1c in such a way that it at least partially covers the circumferential edge 5 of the chip module 3. After step S1, a chip card according to Fig. 1b is present.

According to step S2, the upper sealing layer 7 is applied to the card body 2 in such a way that it completely covers the lower sealing layer 8. After step S2, a chip card 1 according to Fig. 1a is present.

According to step S3, the chip card 1 as shown in Fig. 1a is sent by post from the card manufacturer to the legitimate user. At this point, the invention has an effect on the fraud and forgery protection of the chip card 1, because an attack based on the replacement of the chip module 3 is not possible without being immediately detected by the user. According to the invention, any attempt to remove the chip module 3 without authorization will result in damage to the seal 6. In fact, both the upper sealing layer 7 and the lower sealing layer 8 and/or the card body 2 and/or the chip module 3 will be impaired or even damaged, because an attacker can only expose the circumferential edge 5 if he removes both sealing layers 7, 8. The materials of the sealing layers 7, 8 and/or any adhesive layers are chosen in such a way that the sealing layers 7, 8 are damaged or deformed and can no longer be applied to the card body 2 in the original way.

According to step S4, the user removes the upper sealing layer 7, leaving the lower sealing layer 8 unaffected on the card body 2. The user can now validate the chip card 1 and then use them as intended for payment transfers or the like.

The foregoing description discloses the invention with reference to specific embodiments. The description makes clear that various modifications and changes can be made to the described embodiments without departing from the scope of the invention. For example, process sequences are described with reference to a particular sequence of method steps. However, this sequence of method steps may be modified without affecting the scope, operation and technical effects of the invention. Accordingly, the description and drawings are illustrative rather than limiting.

## Claims

1. Card-shaped Data carrier (1) having a chip module (3) with contact surfaces (4) embedded in its card body (2), **characterized in that** the chip module (3) is covered with a flat seal (6) in such a way that it cannot be removed from the card body (2) without damaging the seal (6).

2. The data carrier (1) according to claim 1, **characterized in that** the seal (6) is applied to the card body (2) in such a way that it at least partially, preferably completely, covers a circumferential edge (5) of the chip module (3) which delimits the chip module (3) from the card body (2).

3. The data carrier (1) according to claim 1 or claim 2, **characterized in that** the seal (6) comprises a lower sealing layer (8) applied to the card body (2) and an upper sealing layer (7) which covers the lower sealing layer (8) at least partially, preferably completely.

4. The data carrier (1) according to claims 2 and 3, **characterized in that** the lower sealing layer (8) covers the circumferential edge (5) of the chip module (3) at least partially, preferably completely, leaving the contact surfaces (4) of the chip module (3) uncovered.

5. The data carrier (1) according to claim 3 or claim 4, **characterized in that** the lower sealing layer (8) consists of an anti-peel material which leaves damage or tamper marks as soon as the lower sealing layer (8) is tampered with or attempts are made to remove the lower sealing layer (8) from the card body (2).

6. The data carrier (1) according to any one of claims 3 to 5, **characterized in that** the upper sealing layer (7) covers the chip module (3) and its contact surfaces (4) at least in such a way that the contact surfaces (4) cannot be used, and preferably covers the contact surfaces (4) completely.

7. The data carrier (1) according to any one of claims 3 to 6, **characterized in that** the upper sealing layer (7) and the lower sealing layer (8) are configured such that the upper sealing layer (7) can be removed without damaging the lower sealing layer (8) or the data carrier (1).

8. The data carrier (1) according to any one of claims 3 to 7, **characterized in that** the lower sealing layer (8) is transparent or is designed in such a way that it does not differ substantially from a graphic design of the data carrier (1).

9. The data carrier (1) according to any one of claims 3 to 8, **characterized in that** the upper sealing layer (7) is designed in such a way that, once removed, it can no longer be applied to the data carrier (1) in such a way that the removal of the upper sealing layer (7) is not detectable.

10. The data carrier (1) according to any one of claims 3 to 9, **characterized in that** the seal (6) is designed in such a way that the seal (6) and/or the chip module (3) and/or the card body (2) have manipulation marks or damages as soon as the lower sealing layer (8) is manipulated or attempts are made to remove the lower sealing layer (8) from the data carrier (1).

11. The data carrier (1) according to any one of claims 1 to 10, **characterized in that** the seal (6) is designed such that the data carrier (1) complies with EMVCo standards.

12. The data carrier (1) according to any one of claims 1 to 11, **characterized in that** the data carrier (1) is a credit card, a payment card, an access card, an identification card or the like.

13. Method of manufacturing a card-shaped data carrier (1) according to any one of claims 1 to 12, **characterized by the** following steps:
- applying (S1) the lower sealing layer (8) to the card body (2) of the data carrier (1) in such a way that it covers the circumferential edge (5) of the chip module (3) at least partially, preferably completely, which delimits the chip module (3) from the card body (2);
- applying (S2) the upper sealing layer (7) to the card body (2) in such a way that it covers the lower sealing layer (8) at least partially, preferably completely.

14. The method according to claim 13, **characterized by the** further step of delivering (S3) the data carrier (1) to a legitimate user or end customer, preferably by mail.

15. Use of a data carrier (1) according to any one of claims 1 to 12, wherein the data carrier (1) according is delivered (S3) to the end customer according to claim 13 and the end customer removes (S4) the upper sealing layer (7) while the lower sealing layer (8) remaining unaffected on the card body (2).
